(19) Europäisches Patentamt

European Patent Office

Office européen des brevets

(11) **EP 1 628 144 A1**

(12) **EUROPEAN PATENT APPLICATION**
published in accordance with Art. 158(3) EPC

(43) Date of publication:
**22.02.2006 Bulletin 2006/08**

(51) Int Cl.:
***G02B 3/00*** (1968.09)

(21) Application number: **04734617.6**

(86) International application number:
**PCT/JP2004/007414**

(22) Date of filing: **24.05.2004**

(87) International publication number:
**WO 2004/106991 (09.12.2004 Gazette 2004/50)**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **27.05.2003 JP 2003148507**

(71) Applicant: **NIKON CORPORATION
Tokyo 100-8331 (JP)**

(72) Inventor: **HAYASHI, Masatoshi,
c/O Nikon Corporation
Tokyo 100-8331 (JP)**

(74) Representative: **HOFFMANN EITLE
Patent- und Rechtsanwälte
Arabellastrasse 4
81925 München (DE)**

(54) **OPTICAL ELEMENT**

(57) The horizontal axis shows the ratio of the coefficient of linear expansion B of the resin to the coefficient of linear expansion A of the substrate, and the vertical axis shows the thickness of the resin. O indicates that there was no peeling of the resin caused by damage to the substrate, and x indicates that peeling of the resin caused by damage to the substrate occurred. When the relationship of (B/A) and the resin thickness Y at which peeling of the resin does not occur is determined from these results, the following relationship (indicated by the curve in the figure) is obtained:

$$Y \leq 200/(B/A) + 30 \quad ... (1)$$

It is seen from this that peeling does not occur if the thickness of the resin is 30 $\mu$m or less. However, it was found that if (B/A) is small, peeling does not occur even at thicknesses greater than 30 $\mu$m, as long as the equation shown above is satisfied.

Fig. 6

EP 1 628 144 A1

**Description**

Technical Field

The present invention relates to an optical element which is an optical element such as a microlens, microlens array or diffraction grating, and which has a substrate made of glass, quartz, or the like, and a resin layer that is formed on at least one surface of this substrate and that forms an optical surface such as a microlens, microlens array or diffraction grating.

Background Art

Methods used to manufacture microscopic optical elements are varied according to the material used and the worked shape of the optical element. Conventionally, spherical lenses or aspherical lenses have been manufactured by grinding or polishing glass. In this case, however, the productivity is poor, and the worked shapes are also extremely limited.

Recently, therefore, methods using direct cutting by means of a bite, and methods using a combination of lithography and etching techniques, have begun to be used as methods for producing microscopic shapes in diffraction gratings and the like. In the former case, shape working on the order of several tens of microns, and in the latter case, sub-micron shape working in accordance with the optical limit of the stepper, can be achieved. In particular, highly functional microscopic optical elements are manufactured by forming a resist pattern on quartz using a lithographic technique, and then cutting the quartz by etching.

This process will be briefly described. The surface of the quartz is uniformly coated with a resist, and a reticle on which a desired pattern is disposed is prepared. After this desired pattern is projected onto the resist using a stepper, the substrate is immersed in a developing solution so that the unnecessary portions of the resist are removed. The formation of a pattern on this resist may also be accomplished using exposure by means of a chromium plated mask or a direct drawing method using an electron beam drawing apparatus instead of using a stepper.

However, although there are no problems in cases where the desired pattern is a simple line and space pattern, a high degree of exposure technology is required in the case of aspherical lenses with freely curved surfaces. There are also cases in which the substrate coated with a resist is annealed prior to exposure or following development. There are cases in which the resist is deformed by annealing, so that there is an effect on the resist pattern formed on the surface of the quartz. Of course, there are also processes in which the desired shape is formed by intentionally causing deformation of the resist shape by annealing.

Next, the quartz is etched in conformity with this resist pattern. The etching that is used is ordinarily dry etching; here, RIE (reactive ion etching) or ICP (inductively coupled plasma)-RIE using an inductively coupled plasma is employed. Cut-out shapes with a high aspect ratio can be etched using ICP-RIE. The quartz is etched by RIE; at the same time, however, the resist is also shaved away. An element substrate in which a fine pattern is etched in a quartz substrate is completed by completely removing the resist that finally remains. Ordinarily, in order to enhance the mass production characteristics of microscopic optical elements, a plurality of element patterns are prepared on the surface of a single quartz substrate, and numerous individual elements are obtained by cutting this substrate.

However, in cases where highly functional microscopic optical elements are manufactured by etching a quartz substrate, the following problem arises: namely, the respective apparatuses are expensive, and numerous lines are required for mass production. Meanwhile, there are also optical elements that use synthetic resins instead of glass. Such optical elements have been adapted for practical use in applications ranging from simple spherical lenses to complicated diffraction gratings. In the case of optical elements using such synthetic resins, optical elements having a desired shape can be mass-produced by forming a matrix, and performing injection molding, thermoplastic molding, ultraviolet curable molding, or the like using this matrix. Research and development on such resin materials have progressed, and these materials are beginning to be used in many fields. A method for manufacturing a synthetic resin optical element using such a matrix is described, for example, in Japanese Patent Application Kokai No. 2002-321227.

The optical communication industry is one field of application of optical elements. Highly functional optical elements are required in all types of applications such as core network systems and short distance communication systems, and a high degree of reliability is required in such optical elements. One problem of optical elements that are made of synthetic resins is that such optical elements have a poor ability to withstand the environment compared to optical elements that are made of quartz, glass, or the like. Accordingly, bonded type synthetic resin optical elements are used in which optical elements made of a synthetic resin are disposed on one side or both sides of a substrate made of quartz or glass (BK7 or the like). The optical element described in the above Patent Reference is also an optical element of this type. It has been found that such bonded type synthetic resin optical elements in which a synthetic resin and glass are bonded are superior in terms of environmental characteristics to optical elements made of a synthetic resin alone.

However, reliability is viewed as being of great importance in communication equipment, and special accelerated tests are performed in order to investigate durability and ability to withstand the environment. In the optical communication parts and equipment industry, the standards advocated by Telecordia Technologies Inc. constitute the actual standard for the industry, and it is required that all parts clear strict environmental tests as typified by the standards GR-1229 and GR-1221 of the same firm. In particular, when a heat cycle test which causes a variation in temperature from -40°C to 100°C over a period of a few minutes is performed, the following problem is encountered: namely, glass substrates are damaged and synthetic resins peel from such glass substrates as a result of stresses caused by differences in the coefficient of thermal expansion between the bonded synthetic resins and substrates, so that such a heat cycle test cannot be withstood.

Thus, bonded type synthetic resin optical elements must have sufficient strength with respect to heat. However, current bonded type synthetic resin optical elements cannot fulfill such functions; as was described above, the problems of resin peeling and floating occur as a result of substrate damage.

Disclosure of the Invention

The present invention was devised in light of such circumstances; it is an object of the present invention to provide a bonded type synthetic resin optical element which can withstand the heat cycle test described above, and which has heat resistance.

The first invention that is used to achieve the object described above is an optical element which has a substrate and a resin layer that is formed on at least one surface of this substrate, wherein the resin layer has a thick portion in which an optical surface is formed inside this resin layer, and a thin portion that is formed in the area surrounding this thick portion.

When the inventor investigated the causes of damage to bonded type synthetic resin optical elements by thermal stress, the inventor found that this damage results from the substrate being subjected to stress in the peripheral portions of the resin layer (due to thermal stress), so that cracking occurs in these portions. No cracking of the substrate or peeling of the adhesive agent was found in the central portion of the resin layer. Furthermore, there was likewise no peeling of the adhesive agent in the end portions of the resin layer. On the basis of these findings, the present inventor discovered that cracking of the substrate can be prevented if the force received by the substrate from the peripheral portions of the resin layer is reduced by making the peripheral portions of the resin layer thinner. Specifically, the heat resistance can be improved by making the thickness of the peripheral portions of the resin layer smaller than the thickness of the interior portions.

The second invention that is used to achieve the object described above is the first invention, wherein the thin portion has a width of at least 50 $\mu$m from the edge portion of the resin layer, and the thickness in this thin portion is 30 $\mu$m or less.

As will be described later in detail in the embodiments, it has been demonstrated that damage does not occur in the heat cycle test described above if the thickness of the thin portion is 50 $\mu$m, and the width of this thin portion from the edge portion is at least 50 $\mu$m.

The third invention that is used to achieve the object described above is the first invention, wherein the thin portion has a width of at least 30 $\mu$m from the edge portion of the resin, and

$$Y \le 200/(B/A) + 30 \quad ...(1)$$

where A is the coefficient of linear expansion of the substrate, B is the coefficient of linear expansion of the resin, and Y is the thickness ($\mu$m) of the thin portion of the resin.

The conditions of the second invention are conditions that hold true for the range of resins ordinarily used as resins. It has been demonstrated, however, that there are also resins that can withstand the heat cycle test even if the thickness is greater than 30 $\mu$m, as in the third invention (depending on the resin). As will be described later in detail in the embodiments, in cases where Equation (1) described above is satisfied, the optical element can withstand the heat cycle test even if the thickness is greater than 30 $\mu$m.

The fourth invention that is used to achieve the object described above is an optical element which has a substrate and a resin layer that is formed on at least one surface of this substrate, wherein an optical surface is formed in the resin layer at least 50 $\mu$m to the inside from the edge portion of this resin layer, and the thickness of the resin is equal to or less than a specified thickness.

In the second invention, the thickness of the outer circumferential portions of the resin layer is smaller than the thickness of the portions located to the inside of these outer circumferential portions. In the present invention, however, the optical surface formed in the resin layer is formed in an area that is located 50 $\mu$m or more to the inside of the outer circumference, and the thickness of the resin is sufficiently reduced. In the case of such a construction, no damage is caused by the heat cycle test even if the thickness of the resin is uniform. Furthermore, the thickness of the resin in this case refers to the thickness of the portions where no optical surface such as a lens or diffraction grating is formed.

The fifth invention that is used to achieve the object described above is an optical element in which

$$Y \leq 200/(B/A) + 30 \quad \dots (1)$$

where A is the coefficient of linear expansion of the substrate, B is the coefficient of linear expansion of the resin layer, and Y is the thickness (μm) of the resin.

In the third invention, the thickness of the outer circumferential portions of the resin is smaller than the thickness of the portions located to the inside of these outer circumferential portions. However, if Equation (1) described above holds true, then no damage is caused by the heat cycle test even if the thickness of the resin is uniform. Furthermore, the thickness of the resin in this case refers to the thickness of the portions where no optical surface such as a lens or diffraction grating is formed.

The sixth invention that is used to achieve the object described above is any of the first through fifth inventions, wherein the size of the surface formed on the substrate is 2500 mm$^2$ at the most.

It is desirable that the size of the surface formed on the substrate be 2500 mm$^2$ at the most.

Brief Description of the Drawings

Figure 1 is a diagram showing an outline of the type I shape used in Embodiment 1.

Figure 2 is a diagram showing an outline of the type II shape used in Embodiment 2.

Figure 3 is a diagram showing an outline of the shape of the bonded type synthetic resin optical element used in Embodiment 1.

Figure 4 is a diagram showing the temperature cycle of the heat cycle test used in the embodiments.

Figure 5 is a diagram showing the conditions of occurrence of peeling using the thickness of the resin and the ratio of the coefficients of linear expansion of the resin and substrate obtained in Embodiment 1 as parameters.

Figure 6 is a diagram showing an outline of the shape of the bonded type synthetic resin optical element used in Embodiment 2.

Best Mode for Carrying Out the Invention

The optical element that is the object of the present invention uses a material such as glass, quartz or artificial quartz as a transparent substrate, and has a synthetic resin formed and bonded by means of an adhesive agent on one surface or both surfaces of this substrate. Common optical glasses as typified by BK7, SF11 and SF14, fused quartz, Dynasil fused quartz, special glasses such as colored glasses, float glasses or Zerodur, and optical crystals such as CaF$_2$, sapphire, quartz and MgO, can be used as this transparent substrate.

In cases where the optical element is caused to function as a reflective type optical element rather than a transmission type optical element, there is no need for any optical characteristics in the substrate, so that all types of materials such as metals, ceramics and plastics can be conceivably used in accordance with requirements in terms of mechanical strength, workability and cost.

Generally, resins used for the purpose of shape transfer can be divided into the two main categories of thermoplastic resins and thermosetting resins. Examples of thermoplastic resins include polycarbonates, polystyrenes, styrene type polymer alloys, polyolefins, polyethylenes, polypropylenes, amorphous polyolefins, acrylic resins, polyvinyl chlorides, thermoplastic polyurethanes, polyesters, polyamide type synthetic fibers, and the like. Meanwhile, examples of thermosetting resins include thermosetting polyurethanes, epoxy resins, unsaturated acrylic resins, acrylic-urethane resins, unsaturated polyesters, diethylene glycol bisallylcarbonate resins, and the like.

In the case of thermosetting resins, a resin liquid with a low molecular weight is used in order to improve the transfer performance. A curing catalyst or curing agent is contained in this resin liquid. In cases where curing is accomplished by means of ultraviolet light, photo-sensitizers are used as curing catalysts. Typical examples of photo-sensitizers include acetophenone type agents, benzoin alkyl ether type agents, propiophenone type agents, ketone type agents, anthraquinone type agents, and thioxanthone type agents. Several different types of agents may also be used in a mixture.

Optical elements such as lenses or diffraction gratings are formed by varying the shape of the resin, and the overall construction is used as an optical element. In particular, optical elements such as microlenses and microlens arrays have such a structure; one example of a method for manufacturing such optical elements is described in Japanese Patent Application Kokai No. 2002-321227 mentioned above.

Incidentally, the bonding strength at the interface between the resin and the substrate is ordinarily determined by the strength of the silane coupling agent used for bonding. Silane coupling agents are generally used as inorganic-organic coupling agents using a hydrolysis reaction. In the case of synthetic resin bonded type optical elements, the $SiO_2$ on the glass or quartz and the synthetic resin are respectively coupled by performing a silane treatment, so that both of these materials are caused to adhere tightly to each other.

Silane coupling agents have two types of functional groups in a single molecule, and thus have two agents, i.e., reactive groups that accomplish chemical coupling with organic materials (vinyl groups, epoxy groups, amino groups, methacrylic groups, mercapto groups, or the like) and reactive groups that accomplish chemical coupling with inorganic materials (methoxy groups, ethoxy groups, or the like). The principle of coupling is as follows: namely, the silane coupling agent that is applied as a coating (in the form of an aqueous solution) to the surface of the $SiO_2$ is hydrolyzed by water that is present in the peripheral areas, so that a silanol is formed, and a portion of this is condensed and converted into an oligomer state. In this state, once the agent has been adsorbed on the $SiO_2$ surface by hydrogen bonding, a dehydration condensation reaction is caused to take place by a subsequent annealing treatment, so that strong chemical bonds are formed. If there is no error in the coating method or annealing treatment, the strength obtained by chemical bonding depends on the chemicals themselves.

(Embodiments)

Embodiments of the present invention will be described below. First, items that are common to the respective embodiments indicated below will be described. Optical elements forming convex lenses were prepared as embodiments, and the characteristics of these lenses in a heat cycle test were evaluated.

(Pretreatment of Substrate)

In these embodiments, BK7 and fused quartz were selected as substrate materials. The substrate that was used had a circular disk shape with a thickness of 1 mm and an external dimension of φ 200 mm, and the surface of this substrate was polished to a value of 10 nm or less in terms of Ra. Immediately after polishing, each substrate was placed in an IPA cleaning device, and the surface of the substrate was subjected to ultrasonic cleaning by IPA. Subsequently, staining or the like was prevented by heat evaporation in a vapor tank.

Since ketone type 1-hydroxycyclohexylphenyl ketones and the like are useful in terms of transfer performance, mold release performance, quality stability, and the like, a mixed ultraviolet curable resin consisting of an acetal glycol diacrylate, urethane acrylate and 1-hydroxycyclohexylphenyl ketone was used, and products with different coefficients of linear expansion were manufactured by varying the mixture ratio.

The silane coupling agent used was KBM-503 (3-methacryloxypropyltrimethoxysilane) commercially marketed by Shin-Etsu Chemical Co., Ltd.

With regard to the silane coupling agent preparation and coating method, the method recommended by the manufacturer was used "as is." First, an aqueous solution with a silane coupling agent concentration of 1% was prepared, and easy mixing was performed to produce an acetic acid concentration of approximately 1% while the acetic acid aqueous solution was agitated. Agitation was performed with a stirrer until the aqueous solution was substantially transparent so that the silane coupling agent was thoroughly hydrolyzed.

A spin shower method was used as the coating method for the silane coupling agent aqueous solution. The substrate was fastened to a spin coater, and this coater was set at a rotational speed of 30 rpm. The silane coupling agent aqueous solution was uniformly applied to the substrate from the center in the form of a blown mist. After it was confirmed that there was no spotting, the rpm of the spin coater was accelerated to 2000 rpm, so that the excess chemical was thrown off. After the excess chemical was shaken off for approximately 1 minute, the substrate was carefully removed from the spin coater and placed in an annealing furnace. Annealing was performed for 30 minutes at approximately 80°C. Afterward, the substrate was removed from the furnace, and was naturally cooled. The surface of the substrate following the silane treatment is activated in order to cause bonding with the resin; unless this substrate is kept in a desiccator with a small moisture content in the air, the bonding strength will drop. It is advisable to perform molding within the same day following the silane treatment.

(Preparation of Mold)

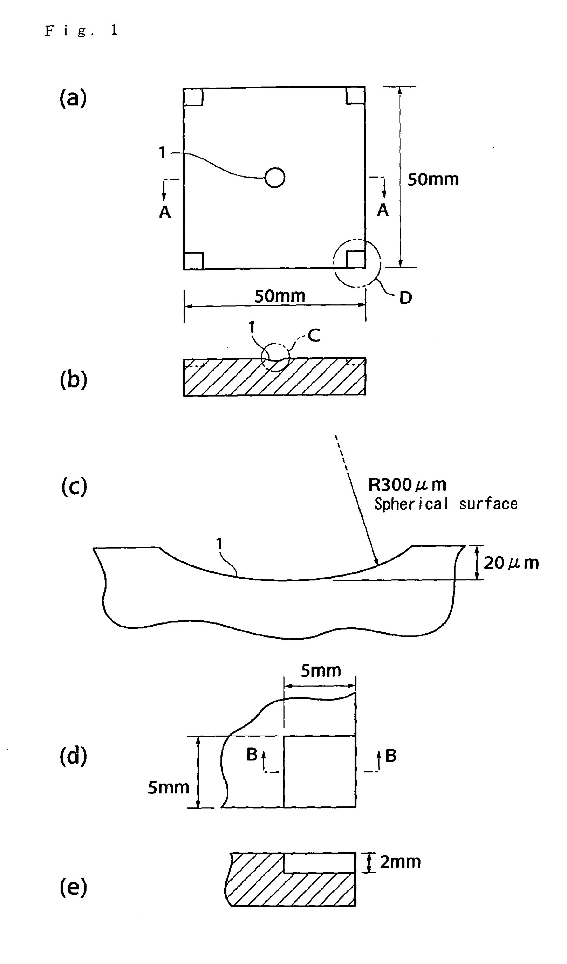

In the present experiment, it was decided to mold a pattern having a convex lens as an optical element. The lens formed was a spherical lens in which the amount of sag was 20 $\mu$m, and R = 300 $\mu$m. The mold used to mold the convex lens in a synthetic resin was prepared on an Ni substrate (50 mm square with a thickness of 10 mm). In this substrate, recesses in which spacers used for the adjustment of the resin thickness were disposed were formed in the four corners as shown in Figure 1. This Ni substrate was fastened to an ultra-high-precision lathe, and the spherical lens shape described above was cut using a bite in which R = 0.2 mm.

Naturally, a convex lens mold 1 reversing the shape of the lens was cut into the mold so that the synthetic resin following molding would form a convex lens. A mold in which only a convex lens mold 1 was formed in the center as shown in Figure 1 will be referred to as type I. In Figure 1, (a) is a plan view, (b) is a sectional view along line A-A in (a), (c) is an enlarged view of part C in (b), (d) is an enlarged view of part D in (a), and (e) is a sectional view along line B-B in (d).

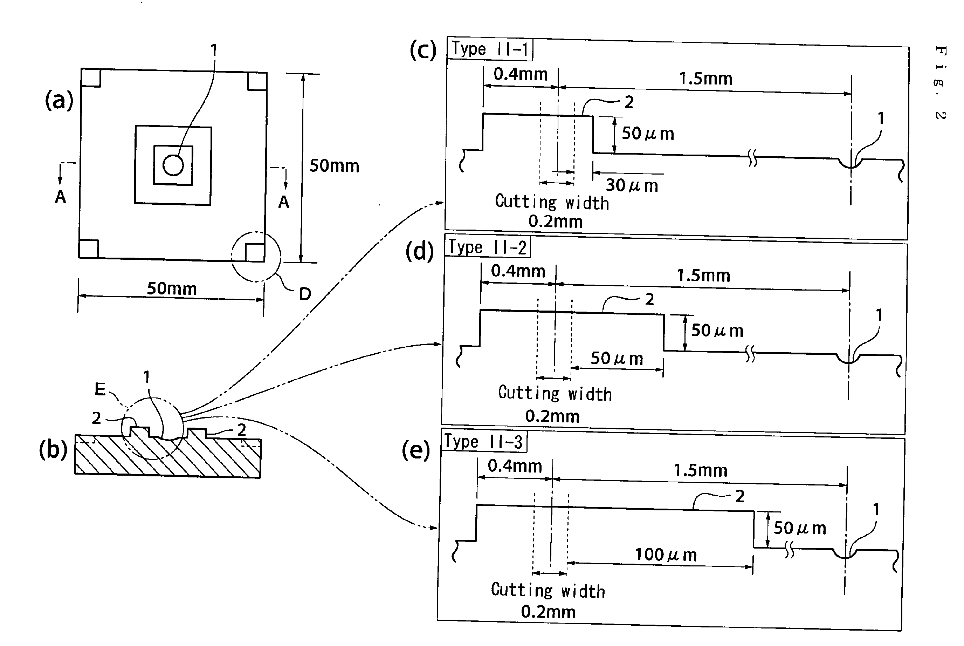

A mold in which a frame-form dike 2 with a height of 80 $\mu$m is formed beforehand on the outer circumferential part of the same convex lens mold 1 as that of type I will be referred to as type II. As is shown in Figure 2, this type II includes three types; these will be referred to as type II-1, type II-2 and type II-3 in accordance with the size of the width of the frame-form dike 2. These types are respectively formed so that the width reaches a region located 30 $\mu$m, 50 $\mu$m or 100 $\mu$m to the inside from the planned cut portion of 3 mm square (constituting the external dimensions of the element).

In Figure 2, (a) is a plan view, (b) is a sectional view along line A-A in (a), and (c) and (d) are enlarged views of part E in (b), respectively corresponding to type II-1, type II-2 and type 11-3. Furthermore, in (c) and (d), the area in the vicinity of the dike 2 is enlarged in the figures, and the dimensions of the dike 2 in the figures are enlarged relative to the dimensions of the recessed part constituting the convex lens mold 1 in the central part.

The method for manufacturing these molds is as follows: namely, the area of the dike 2 is worked using a milling cutter on the Ni mold substrate, so that a mold with the flash removed is manufactured beforehand. Subsequently, a convex lens mold 1 is manufactured by the method described above in the flat portion at the center of the Ni substrate equipped with a dike. All four types of molds were manufactured in this way.

(Embodiment 1)

The dependence with respect to peeling was checked using substrates and resins with different coefficients of linear expansion. As is shown in Table 1, the substrates and resins used were all possible combinations of BK7 and fused quartz with resin I and resin II (having different coefficients of linear expansion).

(Table 1)

| Substrate | Coefficient of Linear Expansion | Resin | Coefficient of Linear Expansion |
|---|---|---|---|
| BK7 | 7.00E-06 | resin I | 1.20E-04 |
| | | resin II | 2.50E-04 |
| Fused quartz | 6.00E-07 | resin I | 1.20E-04 |
| | | resin II | 2.50E-04 |

The molding of the resin layer on the substrate was accomplished using the following procedure. First, spacers manufactured beforehand were disposed in the four corners of type I. The spacers are used to fix the space between the substrate and the mold in order to control the thickness of the resin layer. Here, parts worked in the manner of a block gauge were used. The spacers used were rectangular solids (5 mm square), with a height of (2 mm + target resin thickness). Four gauges each are required. A micro-dispenser is filled with the resin, and the resin is applied dropwise to the surface of the mold in the required volume only. The required amount refers to the amount of resin corresponding to the resin area x resin thickness, assuming that the range through which the resin spreads is substantially circular. The mold to which the resin is applied dropwise clamps and causes tight adhesion of the resin in a configuration in which the surface of the substrate that has been subjected to a silane treatment is joined. Following this adhesion, a weight was placed on the substrate, and the sufficient spread of the resin was awaited. It was confirmed that the substrate contacted the four spacers so that the spread of the resin was stopped. Subsequently, the weight was removed, and the resin was irradiated with 1000 mJ of ultraviolet light, so that the resin was cured. Then, the substrate and the mold were carefully peeled apart.

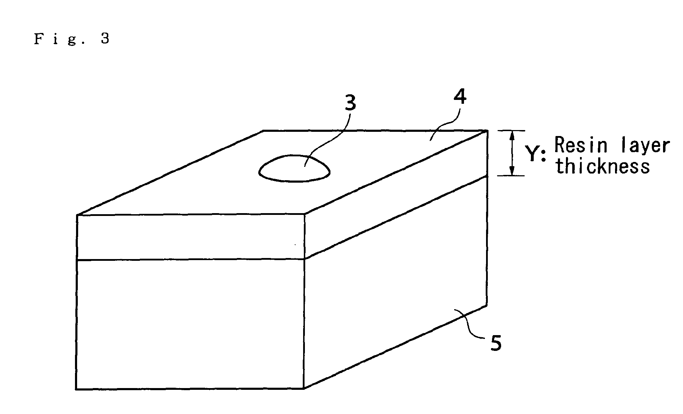

Next, this was cut using a dicing apparatus. The sample was fixed to an appropriate glass substrate by means of wax, and was set in the dicing apparatus. The cutting positions were set so that the central portion of the convex lens was cut out at a 3 mm square standard. After cutting, the sample was completed by performing IPA cleaning and removing the wax. Figure 3 shows an image of the completed element. In Figure 3, 3 indicates the convex lens part, 4 indicates the resin layer, and 5 indicates the substrate.

The thickness Y of the resin layer varies according to the sample. It was confirmed by measurement of the cut surface under a microscope that the thickness of the resin layer was actually as planned. The spacers are worked with good precision, but the actual thickness of the resin is seldom accurately obtained as planned. In the discussion of the results, a judgment is made using these measured results. What is important here is that the thickness of the resin not vary greatly according to the measurement position on the element. Incidentally, this occurs if the substrate and mold are molded in an inclined state.

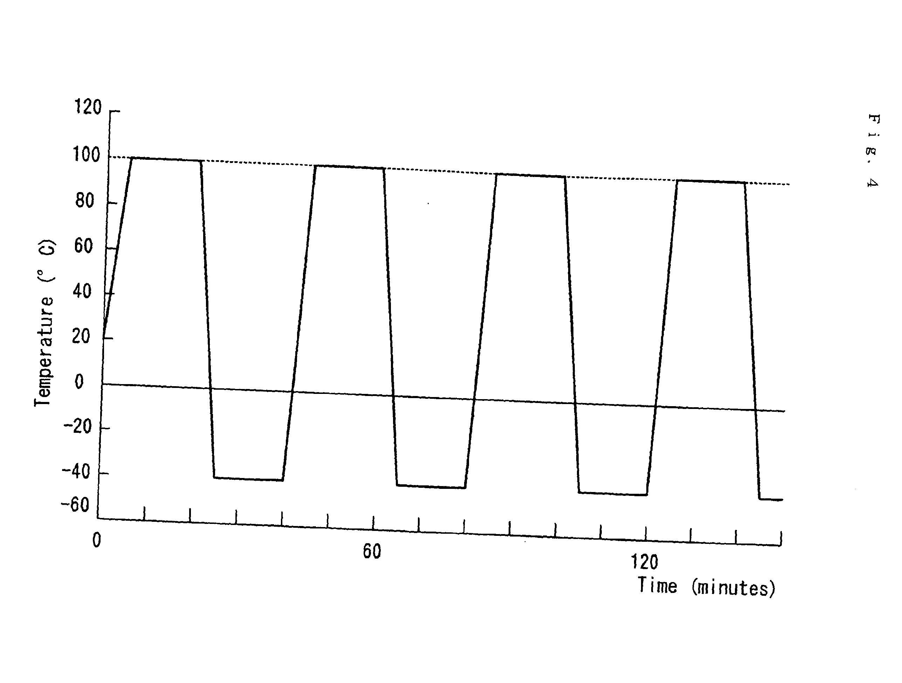

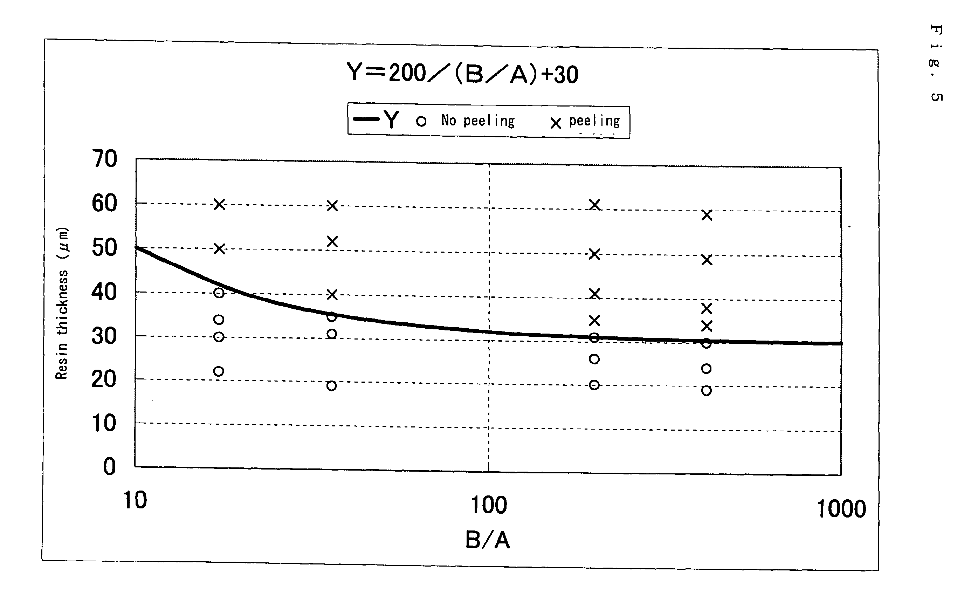

For the four combinations of substrates and resins described above, the respective resin layers were formed with six target thicknesses: namely, 20 μm, 30 μm, 35 μm, 40 μm, 50 μm and 60 μm. Specifically, a total of 24 elements (4 combinations x 6 thicknesses) were manufactured, and these elements were evaluated using the temperature cycle test shown in Figure 4. The results are shown in Figure 5.

In Figure 5, the horizontal axis shows the ratio of the coefficient of linear expansion B of the resin to the coefficient of linear expansion A of the substrate, and the vertical axis shows the thickness of the resin. O indicates that there was no peeling of the resin caused by damage to the substrate, and x indicates that peeling of the resin caused by damage to the substrate occurred. When the relationship of (B/A) and the resin thickness Y at which peeling of the resin does not occur is determined from these results, the following relationship (indicated by the curve in Figure 4 is obtained:

$$Y \leq 200/(B/A) + 30 \quad \dots (1)$$

It is seen from this that peeling does not occur if the thickness of the resin layer is 30 μm or less. However, it was found that if (B/A) is small, peeling does not occur even at thicknesses greater than 30 μm, as long as Equation (1) shown above is satisfied.

It appears that the main reason for the peeling of the resin layer from the substrate is the stress caused by the difference in thermal expansion between the substrate and the resin. This stress is caused by the bimetal effect when a difference occurs in the displacement of the resin and substrate due to the variation of the ambient temperature. Ordinarily, this difference in displacement per 1°C is expressed as the difference in the value obtained by multiplying the total element length of the respective materials by the coefficient of linear expansion. However, the results obtained were as described above, and exceeded the predicted values.

The reason for this appears to be as follows: namely, in actuality, since peeling occurs even if the force "contributing to peeling" (among the stress caused by this difference in displacement) acts locally in the outer circumferential parts of the element, the relationship to peeling cannot be expressed by simple subtraction.

(Embodiment 2)

It was found from the experimental results described in Embodiment 1 that peeling does not occur if the resin thickness is 30 μm or less. Accordingly, new molds were manufactured so that the resin thickness in an area extending for a specified distance from the outermost circumference of the resin would be 30 μm or less, and the effect of these molds against peeling of the resin was investigated. The molds used were type II-1, type II-2 and type II-3 described above.

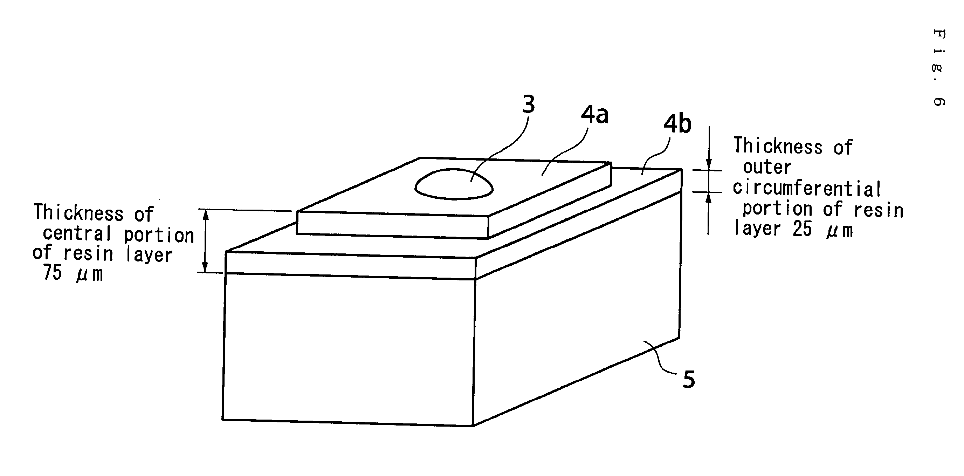

The resin used in the resin layer was resin I of Embodiment 1, and the substrate used was the BK7 of Embodiment 1. The spacer were manufactured with a resin layer thickness of 75 μm as the target thickness. In the case of manufacture at this resin layer thickness, the thickness of the resin layer part 4b in the area corresponding to the dike of the mold should be 25 μm as shown in Figure 6. Furthermore, the thickness in the other areas 4a is 75 μm. In Figure 6, furthermore, 3 indicates the convex lens part, and 5 indicates the substrate.

The substrate treatment and molding method used were similar to those used in Embodiment 1. With regard to cutting as well, the elements were similarly cut out to 3 mm square. In the completed elements, the respective widths of the regions with a resin layer thickness of 25 μm in the outer circumferential portions were different, i.e., 30 μm, 50 μm and 100 μm, corresponding to type II-1, type II-2 and type II-3. All of these samples were evaluated using the temperature cycle test described above. As a result, peeling could not be confirmed in samples having a width of 50 μm or greater. It is thought that this is probably attributable to the following cause: namely, since peeling of the resin layer probably begins from the end surfaces of the outer circumferential parts, the formation of a resin layer thickness which was such that peeling did not occur in these outer circumferential parts also prevented peeling from occurring in the central part. Thus, it was confirmed that if at least an area with a width of 50 μm in the outer circumferential parts of the resin layer is surrounded by an area with a resin thickness of 30 μm or less, peeling will not occur even if the resin thickness of the central part exceeds 30 μm, or Y expressed by Equation (1) described above is exceeded.

A similar experiment was performed in a state in which the resin layer thickness in a region having a width of

50 μm in the outer circumferential portion satisfied Equation (1) described above, with the resin layer thickness located to the inside of this region being set at 75 μm. No peeling of the resin occurred in either case.

Moreover, in the embodiments described above, elements having a convex lens formed on the inside were shown as examples. However, the present invention is not limited to such elements; it would also be possible to use elements in which a concave lens or an optical surface of another shape is formed. Furthermore, in elements having a shape in which it is useful that the thickness of the resin layer on the inside be large, in cases where concave surfaces with a large curvature radius and a large lens diameter are formed, a sufficient thickness can be set in the molded portions of the optical surface, and a resin layer thickness sufficient to obtain the effect of the present embodiment can be set in the outer circumference.

In addition, in cases where this substrate is manufactured so that the area of the largest surface is 2500 mm$^2$ or less, even optical elements such as optical communication parts in which the cross-sectional area of the light beam is 2500 mm$^2$ or less can be provided with durability and an ability to withstand the environment. In the case of such optical communication parts provided with a high durability and ability to withstand the environment, even if these parts are used in cables positioned on the sea floor, or are used in diverse environments such as cold regions or tropical regions, deterioration or destruction of the optical element by changes in the environment can be prevented.

**Claims**

1. An optical element comprising a substrate and a resin layer that is formed on at least one surface of this substrate, wherein the resin layer has a thick portion in which an optical surface is formed inside this resin layer, and a thin portion that is formed in the area surrounding this thick portion.

2. The optical element according to Claim 1, wherein the thin portion has a width of at least 50 μm from the edge portion of the resin layer, and the thickness of this thin portion is 30 μm or less.

3. The optical element according to Claim 1, wherein the thin portion has a width of at least 30 μm from the edge portion of the resin, and

$$Y \le 200/(B/A) + 30 \quad ...(1)$$

where A is the coefficient of linear expansion of the substrate, B is the coefficient of linear expansion of the resin, and Y is the thickness (μm) of the thin portion of the resin.

4. An optical element comprising a substrate and a resin layer that is formed on at least one surface of this substrate, wherein an optical surface is formed in the resin layer at least 50 μm to the inside from the edge portion of this resin layer, and the thickness of the resin is equal to or less than a specified thickness.

5. The optical element according to Claim 4, wherein

$$Y \le 200/(B/A) + 30 \quad ...(1)$$

where A is the coefficient of linear expansion of the substrate, B is the coefficient of linear expansion of the resin layer, and Y is the thickness (μm) of the resin.

6. The optical element according to any one of Claims 1 through 5, wherein the size of the surface formed on the substrate is 2500 mm$^2$ at the most.

Fig. 1

(a)

1

A

50mm

50mm

A

D

(b)

1

C

(c)

R300μm
Spherical surface

1

20μm

(d)

5mm

5mm

B

B

(e)

2mm

F i g . 2

Ｆ ｉ ｇ . 3

3    4

Y: Resin layer thickness

5

Fig. 4

Fig. 5

EP 1 628 144 A1

13

Fig. 6

Thickness of
central portion
of resin layer
75 μm

Thickness of
outer
circumferential
portion of resin
layer 25 μm

3
4a
4b
5

EP 1 628 144 A1

<div align="center">

**INTERNATIONAL SEARCH REPORT**

</div>

| | International application No. |
|---|---|
| | PCT/JP2004/007414 |

**A. CLASSIFICATION OF SUBJECT MATTER**
    Int.Cl⁷  G02B3/00

According to International Patent Classification (IPC) or to both national classification and IPC

**B.  FIELDS SEARCHED**

Minimum documentation searched (classification system followed by classification symbols)
    Int.Cl⁷  G02B3/00

Documentation searched other than minimum documentation to the extent that such documents are included in the fields searched
    Jitsuyo Shinan Koho          1922-1996    Jitsuyo Shinan Toroku Koho    1996-2004
    Kokai Jitsuyo Shinan Koho    1971-2004    Toroku Jitsuyo Shinan Koho    1994-2004

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | JP 2000-249806 A  (Seiko Epson Corp.),<br>14 September, 2000 (14.09.00),<br>Par. Nos. [0046] to [0051]; Fig. 4<br>(Family: none) | 1-3,6 |
| X | JP 2001-30306 A  (Nippon Sheet Glass Co., Ltd.),<br>06 February, 2001 (06.02.01),<br>Par. No. [0033]; Fig. 2<br>(Family: none) | 4-5 |

| ☐ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 June, 2004 (22.06.04) | 06 July, 2004 (06.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)